Europäisches Patentamt

European Patent Office

Office européen des brevets

(11) Veröffentlichungsnummer: **0 085 356**
**B1**

(19)

(12) # EUROPÄISCHE PATENTSCHRIFT

(45) Veröffentlichungstag der Patentschrift:
**27.11.85**

(51) Int. Cl.⁴: **H 04 L 27/00, H 04 B 7/22**

(21) Anmeldenummer: **83100429.6**

(22) Anmeldetag: **19.01.83**

(54) Schaltungsanordnung zur adaptiven Entzerrung von Troposcatterstrecken im Diversitybetrieb.

(30) Priorität: **28.01.82 DE 3202727**

(43) Veröffentlichungstag der Anmeldung:
**10.08.83 Patentblatt 83/32**

(45) Bekanntmachung des Hinweises auf die Patenterteilung:
**27.11.85 Patentblatt 85/48**

(84) Benannte Vertragsstaaten:
**BE DE FR GB IT NL**

(56) Entgegenhaltungen:
**US - A - 3 633 107**
**US - A - 3 755 738**
**US - A - 3 843 942**
**US - A - 3 879 664**

(73) Patentinhaber: **Licentia Patent-Verwaltungs-GmbH,
Theodor-Stern-Kai 1, D-6000 Frankfurt/Main 70 (DE)**
Patentinhaber: **ANT Nachrichtentechnik GmbH,
Gerberstrasse 33, D-7150 Backnang (DE)**

(72) Erfinder: **Bitzer, Eberhard, Dr.-Ing., Franziskusweg 45,
D-7900 Ulm (DE)**
Erfinder: **Buse, Ulrich, Dipl.-Ing., Schwabstrasse 98,
D-7142 Marbach (DE)**

(74) Vertreter: **Schulze, Harald Rudolf, Dipl.-Ing., Licentia
Patent-Verwaltungs-GmbH Theodor-Stern-Kai 1,
D-6000 Frankfurt/Main 70 (DE)**

**Beschreibung**

Die Erfindung betrifft eine Schaltungsanordnung zur adaptiven Entzerrung von Troposcatterverbindungen in Diversitybetrieb für modulierte Signale mit konstanter Hüllkurve.

Die Übertragungskapazität digitaler Troposcatterverbindungen mittlerer Länge (etwa 150-250 km), die auf ebenen Schwund, d. h. dass die Feldstärke aller übertragenen Signale für alle übertragenen Frequenzen gleichmässig schwankt, ausgelegt sind, ist infolge Pulsnebensprechens durch frequenzselektiven Schwund auf Daten von etwa 2 Mbit/s begrenzt. Es ist bekannt, dass man die störenden Auswirkungen des Selektivschwundes durch adaptive Entzerrungsverfahren aufheben oder zumindest verringern und zusätzlich sogar noch einen Gewinn durch die implizite Zeitdiversity der Strecken erzielen kann. Im Prinzip sind die bei Troposcatter angewendeten Entzerrungsverfahren mit den Verfahren identisch, die z. B. in der modernen Technik für Trägerfrequenzkanäle seit längerem gebräuchlich sind. Dies sind vornehmlich die adaptive lineare Entzerrung (LE) und die adaptive nichtlineare Entzerrung mit Entscheidungsrückkopplung (DFE = Decision-Feedback-Equilization).

Bei Troposcattersystemen muss man die Entzerrungsverfahren auf den Diversitybetrieb mehrerer paralleler Kanäle erweitern.

Aus der US-PS Nr. 3633107 ist eine schaltungsanordnung zur linearen Entzerrung bekannt geworden und aus der US-PS Nr. 3879664 eine Schaltungsanordnung zur Entzerrung mit Entscheidungsrückführung. Beide Vorschläge geben adaptive Schaltungsstrukturen zur Realisierung einer optimalen linearen bzw. nicht-linearen Schätzfunktion des Empfangssignals an unter Verwendung des minimalen quadratischen Fehlers für das entzerrte Signal.

Diese Entzerrer sind jedoch nur anwendbar für lineare kohärente Modulations- und Demodulationsverfahren. Denn zum einen muss im Empfänger die Trägerschwingung nach Frequenz und Phase wiederhergestellt werden, um die Adaption der Entzerrerkoeffizienten nach Real- und Imaginärteil durchführen zu können. Zum anderen wird die Entzerrung gemäss der US-PS Nr. 3633107 vollständig im Basis band nach der Demodulation und gemäss der US-PS Nr. 3879664 teilweise im Basisband (nämlich im Rückführungsteil) durchgeführt. Diese Vorgehensweise ist aber nur bei linearer Demodulation möglich. Bei nichtlinearen Modulationsverfahren werden die an sich linearen Verzerrungen des Troposcatterkanals in nichtlineare Verzerrungen im Basisband umgesetzt, wo sie dann mit den angegebenen Strukturen nicht mehr effektiv kompensiert werden können.

Obwohl es viele Gründe für die Verwendung linearer kohärenter Modulationsverfahren gibt, sprechen gerade bei Troposcatterstrecken einige Argumente für den Einsatz nichtlinearer inkohärenter Modulationsverfahren, insbesondere für binäre Frequenztastung (2-FSK). Die Vorzüge der binären Frequenztastung beruhen im wesentlichen auf der einfachen Realisierung des Modulators und Demodulators und auf den Umstand, dass man bei der binären Frequenztastung wegen des Konstanten Betrags der Einhüllenden (Enveloppe) nichtlineare Leistungsverstärker im Sättigungsbereich voll durchsteuern kann. Aus den erwähnten Gründen sind jedoch die bekannten adaptiven Strukturen für nach der binären Frequenzumtastung modulierte Signale ungeeignet.

Der Erfindung liegt die Aufgabe zugrunde, möglichst einfache und effektive adaptive Entzerrerstrukturen für Troposcatterverbindungen in Diversitybetrieb, insbesondere bei Verwendung der binären Frequenztastung, anzugeben.

Die Aufgabe wird durch die im Anspruch 1 angegebene Erfindung gelöst. Dadurch, dass für die Gewinnung des für die Filtereinstellung erforderlichen Fehlersignals das Differenzsignal zwischen Eingang und Ausgang eines zwischen dem linearen Entzerrerteil und dem Demodulator geschalteten Begrenzers im HF-Teil der Schaltungsanordnung verwendet wird, wird ohne grossen Aufwand, insbesondere ohne das Erfordernis einer Trägerrückgewinnung mit Modulatoren und Oszillatoren zur Erzeugung des Vergleichssignals, ein empfindliches Kriterium für vorhandene Verzerrungen der empfangenen Signale erhalten, wodurch mit gutem Erfolg eine lineare Entzerrung einer Troposcatterverbindung erreicht werden kann. Spezielle Testsignale zur Einstellung des Entzerrers sind nicht erforderlich.

Vorteilhafte Ausgestaltungen und Weiterbildungen der Erfindung sind in den Unteransprüchen angegeben. Bei Weiterbildung der Erfindung nach Anspruch 2 ist die Schaltungsanordnung mit Vorteil zur nichtlinearen Entzerrung anwendbar. Anspruch 3 gibt eine vorteilhafte Ausgestaltung des linearen Entzerrerteils im Diversitybetrieb. Die Ausgestaltung des Entzerrerteils gemäss Anspruch 4 erfordert lediglich ein einziges einzustellendes Transversalfilter und ist daher besonders platz- und preisgünstig realisierbar. Die Weiterbildung gemäss Anspruch 5 dient der Vermeidung kritischer Betriebszustände des nichtlinearen Rückführungsteils. Gemäss Anspruch 7 können für das Transversalfilter der erfindungsgemässen Schaltungsanordnung übliche komplexe Transversalfilter verwendet werden. Sie sind dann vorzugsweise entsprechend der im Anspruch 7 gegebenen Anweisung auszuwählen. Eine besonders einfache in der Schaltungsanordnung gemäss der Erfindung einsetzbare reelle Transversalfilterstruktur wird gemäss den Merkmalen nach Anspruch 8 erreicht, da die so ausgebildeten Filter keine Aufspaltung der Koeffizienten in Inphasen- und Quadraturkomponenten erfordern.

Die Erfindung wird nun anhand von Ausführungsbeispielen und Figuren näher erläutert. Es zeigen:

Fig. 1: Blockschaltbild eines adaptiven linearen Entzerrers für Diversitybetrieb gemäss der Erfindung;

Fig. 2: Zeigerdiagramm zur Erläuterung des Fehlersignals;

Fig. 3: Blockschaltbild eines adaptiven nichtlinearen Entzerrers mit Rückführungsteil;

Fig. 4: Blockschaltbild eines adaptiven linearen Entzerrers mit einem ersten ausführlich dargestellten Entzerrerteil;

Fig. 5: Blockschaltbild eines adaptiven linearen Entzerrers mit einem ausführlich dargestellten zweiten Entzerrerteil;

Fig. 6: Blockschaltbild wie Fig. 4, jedoch mit Rückführung und Pegelüberwachung;

Fig. 7: Struktur eines reellen Transversalfilters;

Fig. 8: Lage des Signalspektrums innerhalb der Frequenzgangperiode des reellen Transversalfilters.

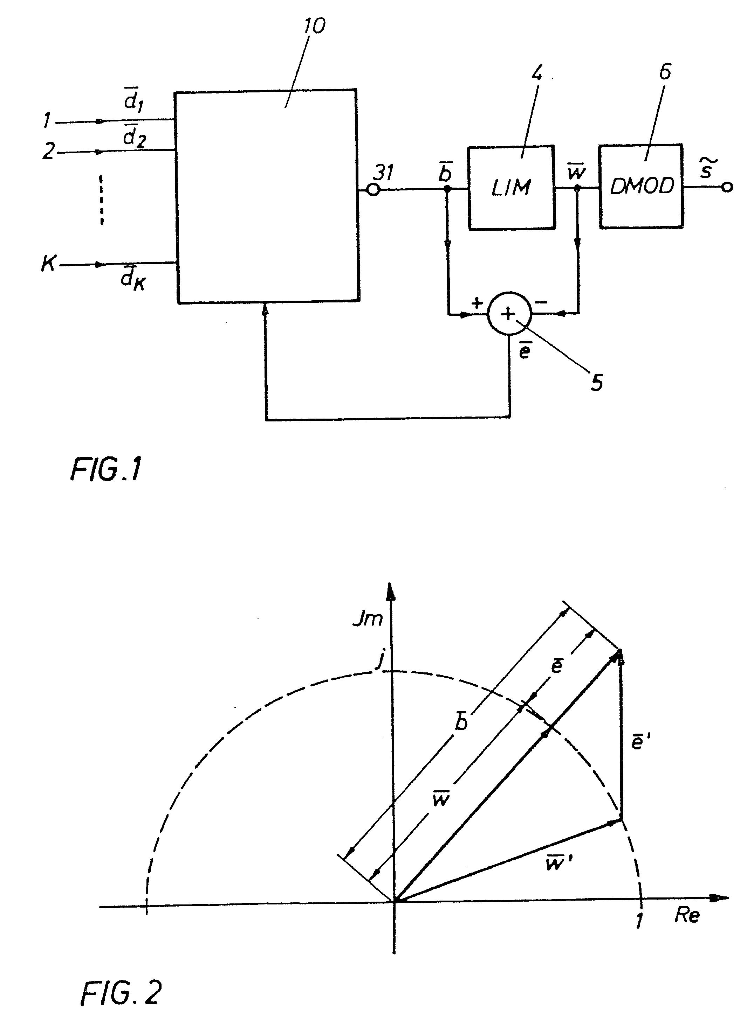

Fig. 1 zeigt den erfindungsgemässen adaptiven linearen Entzerrer für K Diversitykanäle, deren Signale einem mindestens ein Transversalfilter enthaltenden linearen Entzerrerteil 10 zugeführt werden. Die entzerrten Signale werden von einem Demodulator 6 demoduliert. An seinem Ausgang kann das Basisbandsignal $\bar{s}$ abgenommen werden. Gemäss der Erfindung ist nun zwischen dem Entzerrerteil 10 und dem Demodulator 6 ein Begrenzer 4 geschaltet, dessen Eingang und Ausgang mit den beiden Eingängen eines Subtrahiergliedes 5 verbunden ist. Das Subtrahierglied 5 bildet aus der Differenz des Eingangssignals und des Ausgangssignals des Begrenzers 4 ein Fehlersignal $\bar{e}$, welches zur Einstellung der Koeffizienten des bzw. der Transversalfilter des linearen Entzerrerteils 10 dient.

Dieses Fehlerkriterium und seine Erzeugung durch eine geeignete Schaltung sind ein erster wesentlicher Gegenstand der Erfindung. Die Eigenschaften des Fehlersignals werden zunächst anhand der Fig. 2 näher erläutert. Die Figur zeigt das Zeigerdiagramm der komplexen Enveloppen des Summensignals $\bar{b}$, zweier Vergleichssignale $\bar{w}$ und $\bar{w}'$, und zweier Fehlersignale $\bar{e}$ und $\bar{e}'$, für eine willkürlich herausgegriffene Zeit. Durch die Überstreichung der den Signalen zugeordneten Buchstaben soll der Bandpasscharakter bzw. die komplexe Enveloppenschreibweise dieser Grössen gekennzeichnet werden. Die mit dem Apostroph versehenen Grössen gelten für die eingangs erwähnten bekannten Entzerrerstrukturen.

Die bekannten Entzerrer bilden das Fehlersignal $\bar{e}'$ aus der Differenz des entzerrten Signals $\bar{b}$ und eines Vergleichssignals $\bar{w}'$. Dieses Signal $\bar{w}'$ ist im Prinzip das unverzerrte Sendesignal. Es muss jedoch, da es nicht direkt zur Verfügung steht, im Empfänger neu gebildet werden, z. B. durch erneute Modulation des als fehlerfrei unterstellten detektierten Basisbandsignals oder durch Modulation eines gespeicherten Signals während einer Lernphase des Entzerrers. Das Vergleichssignal muss mit dem gleichen Träger wie im Sender gebildet werden. Dazu ist im Empfänger eine aufwendige Trägerrückgewinnungsschaltung erforderlich, die in der Regel gleichfalls adaptiv auszulegen ist, um den Frequenz- und Phasenschwankungen des Trägers im Sender folgen zu können. Jede Instabilität der Trägersynchronisation führt jedoch zu Phasendrehungen des Vergleichssignals $\bar{w}'$. Aus Fig. 2 ist zu ersehen, dass dadurch

ein Fehlersignal $\bar{e}'$ selbst dann entsteht, wenn der Kanal verzerrungsfrei ist. Bei ungenügender Trägersynchronisation kann der Fehleranteil durch Frequenz- und Phasenablage des empfangsseitigen Trägers den eigentlichen Fehler durch die Kanalverzerrungen vollkommen überdecken. Dies führt zu erheblicher Degradation der Entzerrungsqualität bis hin zum Totalausfall des Entzerrers.

Um diese Schwierigkeiten zu vermeiden, wird gemäss der Erfindung zur Gewinnung der Vergleichs- und Fehlersignale, insbesondere bei FSK-modulierten Signalen, der Umstand ausgenutzt, dass die Einhüllende bzw. der Betrag der komplexen Enveloppe bei Signalen mit konstanter Hüllkurve, wie z. B. bei FSK-Signalen, im idealen Fall ohne Verzerrungen konstant ist. Ohne Verzerrungen bewegt sich die Vektorspitze der Vergleichssignale $\bar{w}$ oder $\bar{w}'$ auf dem in Fig. 2 gestrichelt gezeichneten kreis. Als Referenzsignal $\bar{w}$ wird nun aber in vorteilhafter Weise das Signal herangezogen, das die gleiche Phase wie $\bar{b}$, jedoch den unverzerrten Betrag 1 (bzw. eine andere zweckmässige Konstante) hat. Anstatt also das entzerrte Signal in Richtung auf ein Vergleichssignal zu drehen, wird umgekehrt von vornherein die Phase des Vergleichssignals gleich der Phase des entzerrten Signals gesetzt. Offenbar verschwindet das Fehlersignal

$$\bar{e} = \bar{b} - \bar{w} \qquad (1)$$

dann, wenn die Kanalverzerrungen ausgeregelt worden sind, bzw. die Verzerrungsleistung des Fehlers minimiert worden ist.

Das Fehlersignal (Gl. 1) lässt sich wie in Fig. 1 dargestellt, in sehr einfacher Weise als Differenz des Ein- und Ausgangssignals eines Amplituden-Begrenzers 4 gewinnen. Mit diesem Fehlersignal kann die Adaption der Entzerrerkoeffizienten in an sich bekannter Weise erfolgen. Vorzugsweise wird man den stochastischen Gradientenalgorithmus (z. B. Advances in communication systems, vol. 4, Academic Press, New York, 1975, S. 123-198) oder eine vereinfachte Version desselben benutzen, weil dieser Algorithmus mit vergleichsweise geringem Aufwand implementiert werden kann und für Troposcatter ausreichend schnell adaptiert.

Es ist bekannt, dass die reinlineare Entzerrerstruktur für stärkere Verzerrungen des Übertragungskanals nicht ausreicht. Ein merkbar besseres Systemverhalten erhält man mit dem Prinzip der Entscheidungsrückführung (DFE), wie est beispielsweise in der oben angegebenen Literaturstelle beschrieben ist. Die DFE-Struktur besitzt darüberhinaus auch weitere Vorzüge, die sowohl die Adaption wie auch die schaltungsmässige Realisierung betreffen. Schliesslich ist sie speziell für Troposcatterstrecken geeignet, weil hier vorzugsweise Nachläufer als Impulsstörungen auftreten. Bei Signalen mit konstanter Hüllkurve, insbesondere FSK-modulierten Signalen muss man wegen der nichtlinearen Demodulation dir rückgeführten Anteile vor dem Demodulator im ZF-Bereich abziehen. Dazu könnte man das regenerierte Basisbandsignal $\bar{s}$ wieder in den ZF-Bereich zur Rückführung hochmodulieren. Man sähe sich dann aber erneut mit dem Problem der Trägerrückgewinnung konfrontiert. Darum wird als vorteilhafte Weiterbildung der Erfindung das Signal $\overline{w}$ am Ausgang des Amplitudenbegrenzers nicht nur zur Fehlersignalgewinnung, sondern auch zur Rückführung herangezogen.

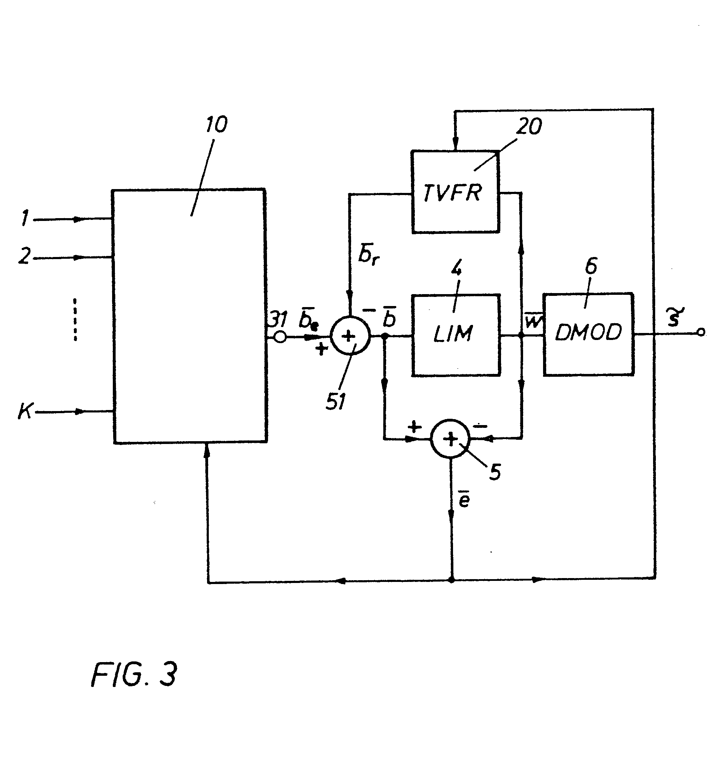

In Fig. 3 ist das Blockschaltbild eines adaptiven nichtlinearen Entzerrers mit Rückführungsteil dargestellt. Zwischen dem linearen Entzerrerteil 10 und dem Begrenzer 4 ist ein zweites Subtrahierglied 51 geschaltet, dessen zweiter Eingang über ein weiteres Transversalfilter 20 mit dem Ausgang des Begrenzers 4 verbunden ist. Zur Einstellung der Koeffizienten des weiteren Transversalfilters 20 dient, wie auch zur Einstellung der übrigen Filterkoeffizienten des linearen Entzerrerteils 10, das am Ausgang des ersten Subtrahiergliedes 5 abnehmbare Fehlersignal $\overline{e}$.

Die Schaltung unterscheidet sich im Prinzip von dem in Fig. 1 gezeigten Blockschaltbild nur durch das zusätzliche Transversalfilter 20, über das das Signal $\overline{w}$ am Ausgang des Begrenzers 4 rückgeführt und von dem Ausgangssignal $\overline{b}_e$ des linearen Entzerrerteils 10 abgezogen wird. Die Koeffizienten des Transversalfilters 20 werden also mit dem gleichen Fehlersignal $\overline{e}$ nach den bereits erwähnten bekannten Algorithmen eingestellt.

Da die Rückführung vor der Demodulation stattfindet, besitzt die in Fig. 3 gezeigte Schaltung im strengen Sinne keine Entscheidungsrückkopplung mehr, sondern lediglich eine nichtlineare Rückführung nach dem Begrenzer 4. Die erfindungsgemässe Rückführung kompensiert in ähnlicher Weise wie die bekannte Entscheidungsrückführung die Nachläufer der Kanalverzerrungen.

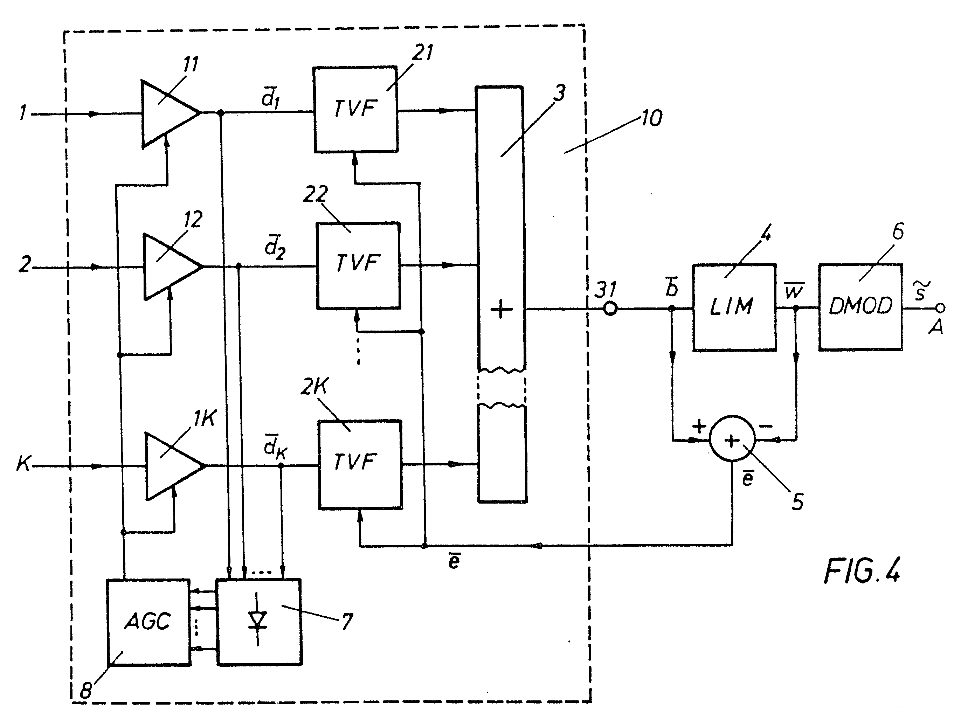

Für die Ausgestaltung des linearen Entzerrers 10 gibt es verschiedene Möglichkeiten. Bei der Ausgestaltung des Entzerrerteils gemäss Fig. 4 ist jedem Diversitykanal ein adaptives Transversalfilter 21, 22 bis 2K mit einem davor geschalteten geregelten Verstärker 11, 12 bis 1K zugeordnet. Die Regelverstärker 11, 22 bis 1K haben im Prinzip keinen Einfluss auf die Entzerrung. Sie halten lediglich die Pegel der Signale $\overline{d}_N$ (N = 1, 2, ..., K) in einem für die folgenden Transversalfilter günstigen Arbeitsbereich. Dies geschieht mittels einer Einheit 7, die aus K Hüllkurvendetektoren und einer Auswertestufe, verbunden mit einem AGC-Verstärker 8 besteht, der die Signale zur automatischen Verstärkungsregelung verstärkt. Die Hüllkurvendetektoren erzeugen den Amplitudenwerten der Eingangssignale $\overline{d}_1$ bis $\overline{d}_K$ entsprechende Gleichspannungen. Mit Hilfe der Auswertestufe stellt der Verstärker 8 die Verstärkung der Regelverstärker 11 bis 1K so ein, dass das grösste Empfangssignal eines Kanals die Verstärkung aller übrigen Verstärker bestimmt. Dadurch werden einerseits Überpegel an den Transversalfiltern vermieden, andererseits werden die Diversitykanäle mit kleinen Signalpegeln in den Transversalfiltern so bewertet, dass die Summation aller Signale zum Signal mit dem grössten Rauschabstand führt (Maximum-Ratio-Prinzip). Die Zeitkonstante der Verstärkungsregelung ist dem Fadingverhalten des Troposcatterkanals anzupassen und liegt deshalb im Millisekundenbereich.

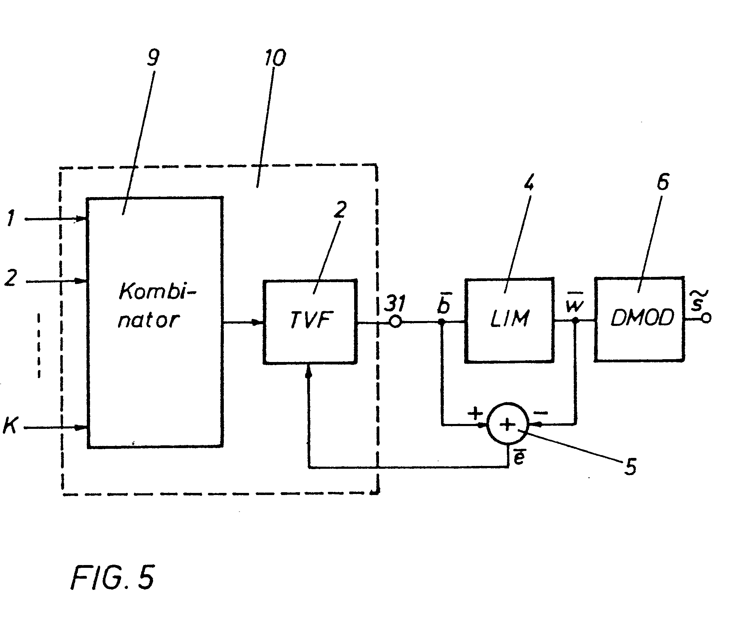

Sofern vom Troposcatterkanal geringere Verzerrungen zu erwarten sind, kann durch die Ausgestaltung der Erfindung gemäss Fig. 5 die Anzahl der einzustellenden Filterkoeffizienten erheblich verringert werden. Wie ersichtlich, enthält hier der Entzerrerteil 10 einen Kanalkombinator 9, der die Signale der Diversitykanäle 1, 2, ..., K zu einem Summensignal zusammenfasst. Der Ausgang des Kanalkombinators 9 ist an dem Eingang eines einzigen Transversalfilters 2 angeschlossen, dessen Ausgang der Ausgang des Entzerrerteils 10 ist. Auch in diesem Fall werden die Koeffizienten des Transversalfilters 2 nach Massgabe des Fehlersignals $\overline{e}$ eingestellt.

Die Zusammenfassung der Diversitykanäle im Kombinator 9 erfolgt zweckmässigerweise wieder nach dem Maximum-Ratio-Prinzip. Die Funktion des Entzerrers entspricht genau der des linearen adaptiven Entzerrers nach Fig. 4, wenn nur ein einziger Diversitykanal bestehen würde (K = 1).

Es ist vorteilhaft, in dem Transversalfilter 2 (Fig. 5) einen der Filterkoeffizienten als reines einstellbares Dämpfungsglied auszubilden. Die Steuerung ist dann so vorzunehmen, dass auch bei veränderlicher Verzerrungsleistung die Gesamtverstärkung des Transversalfilters konstant bleibt. Dies ist durch eine einfache Pegelüberwachung des Signals am Begrenzereingang möglich, die ähnlich wie eine automatische Verstärkungsregelung arbeitet.

Die erfindungsgemässe Rückführung ist zur Verbesserung des Systemverhaltens auch für den Diversityempfänger mit nur einem linearen Entzerrer entsprechend Fig. 3 anwendbar. Die Diversitykanäle werden zuerst durch den Kombinator 9 (Fig. 5) zusammengefasst, dann folgt der lineare Vorentzerrer 2 und schliesslich die in Fig. 3 gezeigte und bereits beschriebene nichtlineare Rückführung.

Bei stärkeren Kanalverzerrungen kann die Schaltung mit Rückführung nach Fig. 3 mit Entzerrerteil nach Fig. 4 oder Fig. 5 in einen unerwünschten Betriebszustand gelangen, in dem das Fehlersignal $\overline{e}$ verschwindet, ohne dass der Entzerrer sinnvoll arbeitet. Bezeichnet man in Fig. 3 mit $\overline{b}_e$ das Ausgangssignal des linearen Entzerrerteils 10, mit $\overline{b}_r$ das rückgeführte Signal, so verschwindet der Fehler

$$\overline{e} = \overline{b}_e - \overline{b}_r - \overline{w} \qquad (2)$$

auch für die triviale Lösung:

$$\overline{b}_e \equiv 0 \qquad (3)$$
$$\overline{b}_r = -\overline{w} \qquad (4)$$

Der Entzerrerteil unterdrückt also das eigentliche Sendesignal, während in der Rückkopplungsschleife ein Signal umläuft, das nur die Bedingung 4 erfüllt, ohne eine Information zu enthalten. Zur sicheren Erkennung dieses Zustandes wird in vorteilhafter Weise der Pegel des vom linearen Entzerrerteil 10 kommenden Ausgangssignals $\overline{b}_e$ überwacht.

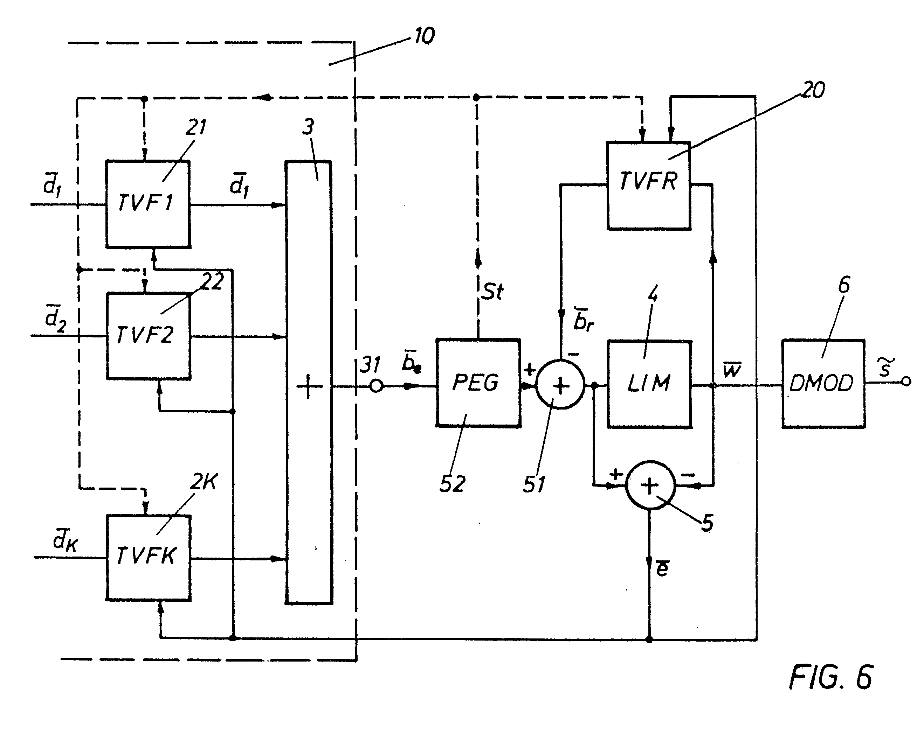

Fig. 6 zeigt die zugehörige Schaltungsstruktur. Der Block 52 überwacht den Pegel des vom linearen Entzerrerteil 10 kommenden Signals $\overline{b}_e$ und erzeugt bei Unterschreiten eines bestimmten Pegels einen kurzen Steuerimpuls St. Durch diesen Impuls werden alle Filterkoeffizienten auf vorgegebene Werte eingestellt. Der dadurch hervorgerufene Adaptionsvorgang wird so oft wiederholt, bis ein sinnvoller Betriebszustand, der nicht durch die Gleichungen 3 und 4 gekennzeichnet ist, gefunden worden ist.

Die Pegelüberwachung sollte ansprechen, sobald der Pegel etwa um 30 dB unterhalb des Langzeitmittelwertes gesunken ist. Zweckmässigerweise werden dann alle Rückführungskoeffizienten auf den Wert Null gesetzt und im linearen Teil mindestens ein Koeffizient (vorzugsweise der letzte) jedes Transversalfilters auf den Bezugswert Eins.

In speziellen Fällen, wo nur geringe Verzerrungen zu erwarten sind, kann im Transversalfilter 2 (Fig. 5) ein Filterkoeffizient fest eingestellt werden. Sind lediglich Vorläufer zu entzerren, so ist der letzte Koeffizient in der Filterkette einzustellen. Sollen jedoch auch nachläufer entzerrt werden, so ist für die Einstellung ein mittlerer Filterkoeffizient zu wählen.

Neben einem verringerten Aufwand ergibt sich dadurch bei der Schaltung gemäss Fig. 5 mit zusätzlicher Entscheidungsrückführung der weitere wesentliche Vorteil, dass bei dieser Schaltungsanordnung die Bedingung der Gleichung 3 niemals erfüllt wird, denn der Vorentzerrerteil kann das Empfangssignal nicht unterdrücken. Dadurch entfällt die zu Fig. 6 beschriebene Pegelüberwachung am Ausgang 31 des Summiergliedes 3.

Die Schaltunganordnungen gemäss den Fig. 1 und 3 sind im Prinzip unabhängig von der speziellen Struktur der Transversalfilter anwendbar und damit auch mit den bekannten komplexen Transversalfiltern realisierbar. In diesem Fall sind die Laufzeiten in den Laufzeitgliedern der Transversalfilter gleich der Schrittdauer T des digitalen Empfangssignals oder gleich dem n-ten Teil davon zu wählen. Vorzugsweise setzt man n = 2 im linearen Vorentzerrerteil und n = 1 in der Rückführung.

Die Anzahl der Koeffizienten in den Filtern hängt von der Länge der Übertragungsstrecke und der Schrittgeschwindigkeit des Empfangssignals ab. Für mittellange Strecken (etwa 150-250 km) und Schrittgeschwindigkeiten von etwa 10 Mbit/s sind zwei bis drei komplexe Koeffizienten pro Filter im linearen Entzerrerteil 10 und die gleiche Anzahl im Transversalfilter 2 des Rückführungsteils vorzusehen.

Der Verzicht auf die Trägersynchronisation bei der Adaption des Entzerrers führt zu gewissen Einbussen in der Entzerrungsqualität gegenüber derjenigen, die mit üblichen komplex aufgebauten Transversalfiltern im ZF-Bereich mit Trägerrückgewinnung erhalten wird. Diese komplex aufgebauten Transversalfilter entzerren den Inphasen- und den Quadraturanteil der Kanalimpulsantwort getrennt.

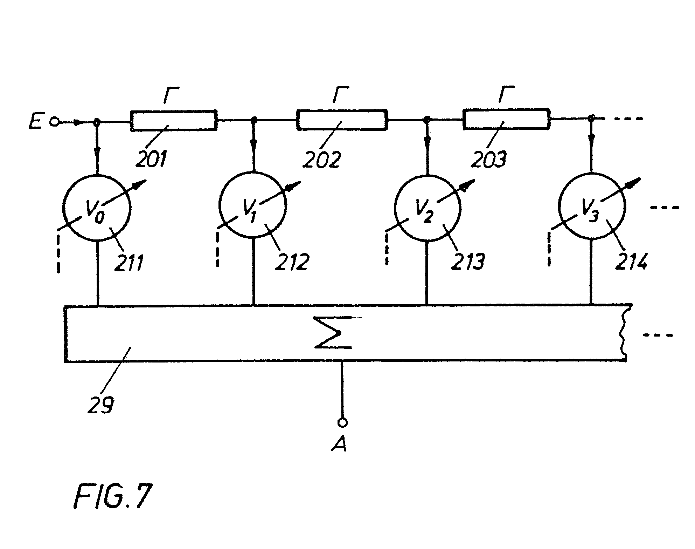

Mit dem erfindungsgemässen Fehlersignal ist diese Trennung jedoch nicht genau genug durchführbar, weil die Phase des Referenzsignals nicht nur vom Sender, sondern auch von den Kanalverzerrungen abhängt. Es ist darum zweckmässiger, die in Fig. 7 gezeigte und im folgenden beschriebene Transversalfilterstruktur einzusetzen, bei der die Trennung in Inphasen- und Quadraturanteil entfällt.

In Fig. 7 ist mit E der Eingang und mit A der Ausgang des Transversalfilters bezeichnet. Vor und hinter den laufzeitgliedern 201, 202, ... der jeweiligen Laufzeit $\Gamma$ sind einstellbare Bewertungsglieder 211, 212, ... geschaltet zur Einstellung der Filterkoeffizienten. Die Ausgangssignale der Bewertungsglieder werden im Summierglied 29 zusammengefasst.

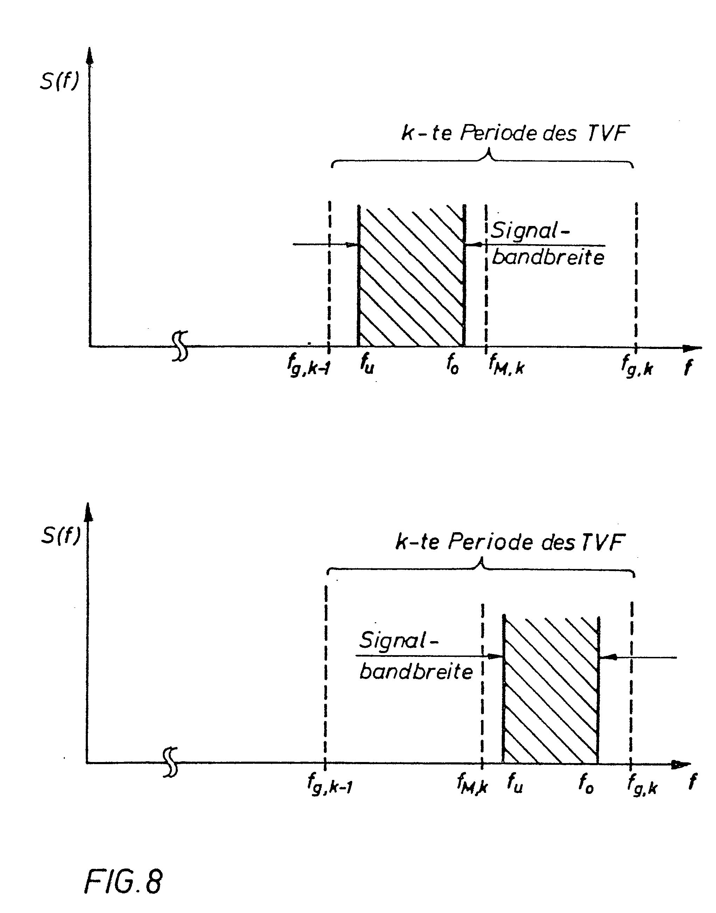

Anhand der Fig. 8 sollen nun die Parameter dieser neuen Transversalfilterstruktur erläutert werden. Die Laufzeiten $\Gamma$ dieses Transversalfilters werden so gewählt, dass das Frequenzspektrum S(f) des bandpasssignals mit den Frequenzgrenzen $f_u$ und $f_o$ gerade in die k-te Frequenzperiode der Frequenzen $f_{g.k-1}$ bis $f_{g.k}$ mit der Mittenfrequenz $f_{M.k}$ des Transversalfilters fällt. Dabei existieren zwei Möglichkeiten:

In Fig. 8 oben liegt der Frequenzbereich des Bandpasssignals in dem bezüglich der Mittenfrequenz $f_{M.k}$ linken unteren Teil der Frequenzgangperiode. Hierbei muss die Laufzeit $\Gamma$ folgende Bedingungen erfüllen:

$$\frac{2k-1}{2f_u} \le \Gamma \le \frac{k}{f_o}; \quad 0 \le k \le \text{Entier}\left[\frac{f_o}{2\,(f_o-f_u)}\right]; \quad (5)$$

In Fig. 8 unten liegt der interessierende Frequenzbereich im rechten oberen Teil der Periode. Für diesen Fall muss die Laufzeit die Bedingungen erfüllen:

$$\frac{k}{f_u} \le \Gamma \le \frac{2k+1}{2f_o}; \quad 0 \le k \le \text{Entier}\left[\frac{f_u}{2\,(f_o-f_u)}\right]; \quad (6)$$

Hierin bedeuten k die Ordnungszahl der Frequenzganperiode, $f_u$ bzw. $f_o$ die untere bzw. obere Grenzfrequenz des Frequenzbandes des Signals, Entier () die grösste ganze Zahl, die kleiner oder gleich dem Ausdruck in der Klammer ist und $\Gamma$ die Laufzeit in einem Laufzeitglied des in Fig. 7 dargestellten Transversalfilters.

Es ist zweckmässig, aus den Gleichungen 5 und 6 zunächst die grösste mögliche Periodenzahl k zu bestimmen und dann die Toleranzgrenzen für die Filterlaufzeiten $\Gamma$ zu berechnen.

Sofern man diese Filterlaufzeiten einhält, kann man die Entzerrung von Bandpasssignalen mit Transversalfiltern gemäss Fig. 7 durchführen, die, wie bei ihrer Anwendung im Basisband, nur reelle Filterkoeffizienten enthalten und keinerlei Vorrichtungen zur Auftrennung in Inphasen- und Quadraturkomponenten, wie sie z. B. 90°-Phasenschieber, Hilbertfilter oder Phasensplitter, erfordern.

Für die Schaltungsanordnungen gemäss den Fig. 1, 3, 4, 5 und 6 ist es besonders vorteilhaft, diese reelle Transversalfilterstruktur für alle dort gezeigten Transversalfilter zu verwenden.

Die Erfindung ist bei Modulationsverfahren mit reiner Phasen- oder Frequenzmodulation einsetzbar. Ob dabei die Demodulation linear, nichtlinear, kohärent oder inkohärent vorgenommen wird, spielt prinzipiell keine Rolle. Es muss nur gewährleistet sein, dass das unverzerrte Signal eine konstante Einhüllende besitzt.

## Patentansprüche

1. Schaltungsanordnung zur adaptiven Entzerrung von Troposcatterverbindungen in Diversitybetrieb für modulierte Signale mit konstanter Hüllkurve mit einem mindestens ein Transversalfilter enthaltenden linearen Entzerrerteil (10), dem die Signale der Diversitykanäle (1, 2, ..., K) zugeführt sind und dessen Filter mit einem Fehlersignal beaufschlagt werden, dadurch gekennzeichnet, dass zwischen dem Entzerrerteil (10) und einem die entzerrten Signale demodulierenden Demodulator (6) ein Begrenzer (4) geschaltet ist und dass der Eingang und Ausgang des Begrenzers (4) mit den beiden Eingangen eines ersten Subtrahiergliedes (5) verbunden ist, dass aus der Differenz des Ein- und Ausgangssignals des Begrenzers (4) das Fehlersignal ($\overline{e}$) bildet, welches zur Einstellung der Koeffizienten des bzw. der Transversalfilter des linearen Entzerrerteils (10) dient (Fig. 1).

2. Schaltungsanordnung nach Anspruch 1, dadurch gekennzeichnet, dass zwischen dem linearen Entzerrerteil (10) und dem Begrenzer (4) ein zweites Subtrahierglied (51) geschaltet ist, dessen zweiter Eingang über ein weiteres Transversalfilter (20) mit dem Ausgang des Begrenzers (4) verbunden ist und dass das am Ausgang des ersten Subtrahiergliedes (5) abnehmbare Fehlersignal ($\overline{e}$) zusätzlich zur Einstellung der Koeffizienten des weiteren Transversalfilters (20) dient (Fig. 3).

3. Schaltungsanordnung nach einem der beiden Ansprücher 1 oder 2, dadurch gekennzeichnet, dass der Entzerrerteil (10) je Diversitykanal (1, 2, ..., K) ein Transversalfilter (21, 22, ..., 2K) enthält, deren Filterkoeffizienten nach Massgabe des Fehlersignals ($\overline{e}$) einstellbar sind und dass die Ausgänge der Transversalfilter (21, 22, ..., 2K) an den Eingängen eines Summiergliedes (3) angeschlossen sind, dessen Ausgang der Ausgang des Entzerrerteils (10) ist (Fig. 4).

4. Schaltungsanordnung nach einem der beiden Ansprücher 1 oder 2, dadurch gekennzeichnet, dass der Entzerrerteil (10) einen Kanalkombinator (9) enthält, der die Signale der Diversitykanäle (1, 2, ..., K) zu einem Summensignal zusammenfasst, dass der Ausgang des kanalkombinators (9) an dem Eingang eines einzigen Transversalfilters (2) angeschlossen ist, dessen Ausgang der Ausgang des Entzerrerteils (10) ist und dass die Koeffizienten des einzigen Transversalfilters (2) nach massgabe des Fehlersignals ($\overline{e}$) einstellbar sind (Fig. 5).

5. Schaltungsanordnung nach einem der Ansprüche 2 bis 4, dadurch gekennzeichnet, dass zwischen dem Ausgang des linearen Entzerrerteils (10) und dem Begrenzer (4) eine Pegelüberwachungseinrichtung (52) mit einem Steuersignalausgang geschaltet ist, der bei einem bestimmten niedrigen Pegel des Ausgangssignals des Entzerrerteils (10) ein Steuersignal (St) abgibt und dass der Steuersignalausgang mit sämtlichen Transversalfiltern der schaltungsanordnung verbunden ist (Fig. 6).

6. Schaltungsanordnung nach Anspruch 4 für den Fall geringer kanalverzerrungen, dadurch gekennzeichnet, dass ein Koeffizient des einzigen Transversalfilters (2) einen eingeschränkten Einstellbereich aufweist.

7. Schaltungsanordnung nach einem der vorangegangenen Ansprüche, dadurch gekennzeichnet, dass die Transversalfilter (21, 22, ..., 2K; 2) des linearen Entzerrerteils (10) und/oder das weitere Transversalfilter (20) als komplexe Transversalfilter realisiert sind und die Laufzeiten der laufzeitglieder dieser Transversalfilter gleich der Schrittdauer oder dem n-ten Teil der Schrittdauer (n = 2, 3, ...) des digitalen Signals gewählt sind.

8. Schaltungsanordnung nach einem der Ansprüche 1 bis 6, dadurch gekennezeichnet, dass die Transversalfilter (21, 22, ..., 2K; 2) des linearen Entzerrerteils (10) und/oder das weitere Transversalfilter (20) als reelle Transversalfilter (Fig. 7) realisiert sind und die laufzeitglieder in den Transversalfiltern des Entzerrerteils (21, 22, ..., 2K; 2) und/oder des weiteren Transversalfilters (20) gemäss den Gleichungen:

$$\frac{2k-1}{2f_u} \leq \Gamma \leq \frac{k}{f_o}; \quad 0 \leq k \leq \text{Entier}\left[\frac{f_o}{2\,(f_o-f_u)}\right];$$

oder

$$\frac{k}{f_u} \leq \Gamma \leq \frac{2k+1}{2f_o}; \quad 0 \leq k \leq \text{Entier}\left[\frac{f_o}{2\,(f_o-f_u)}\right];$$

dimensioniert sind, wobei

k die Ordnungszahl der Frequenzgangperiode,

$f_u$ und $f_o$ die untere bzw. obere Grenzfrequenz der digitalen Signale,

$\Gamma$ die Laufzeit der Signale in einem laufzeitglied und Entier (E) die grösste ganze Zahl ist, die kleiner oder gleich E ist.

## Claims

1. Circuit arrangement, for the adaptive equalisation of troposcatter connections in diversity operation for modulated signals of constant envelope curve, with a linear equaliser part (10), which contains at least one transverse filter and to which the signals of the diversity channels (1, 2, ..., K) are conducted and the filters of which are acted on by an error signal, characterised thereby, that a limiter (4) is connected between the equaliser part (10) and a demodulator (6) demodulating the equalised signals and that the input and output of the limiter (4) are connected with both the inputs of a first subtracting member (5), which from the difference between the input and output signals of the limiter (4) forms the error signal ($\overline{e}$), which serves for the setting of the co-efficients of the transverse filter or filters of the linear equaliser part (10) (Fig. 1).

2. Circuit arrangement according to Claim 1, characterised thereby, that a second subtracting member (51), the second input of which is connected through a further transverse filter (20) with the output of the limiter (4), is connected between the linear equaliser part (10) and the limiter (4) and that the error signal ($\bar{e}$) derivable at the output of the first subtracting member (5) serves additionally for the setting of the co-efficients of the further transverse filter (20) (Fig. 3).

3. Circuit arrangement according to claim 1 or 2, characterised thereby, that the equaliser part (10) for each diversity channel (1, 2, ..., K) contains a respective transverse filter (21, 22, ..., 2K), the filter co-efficients of which are settable in accordance with the error signal ($\bar{e}$), and that the outputs of the transverse filters (21, 22, ..., 2K) are connected to the inputs of a summating member (3), the output of which is the output of the equaliser part (10) (Fig. 4).

4. Circuit arrangement according to Claim 1 or 2, characterised thereby, that the equaliser part (10) contains a channel combiner (9), which combines the signals of the diversity channels (1, 2, ..., K) into a sum signal, that the output of the channel combiner (9) is connected to the input of a single transverse filter (2), the output of which is the output of the equaliser part (10) and that the co-efficients of the single transverse filter (2) are settable in accordance with the error signal ($\bar{e}$) (Fig. 5).

5. Circuit arrangement according to one of the Claims 2 to 4, characterised thereby, that a level monitoring equipment (52) with a control signal output, which delivers a control signal (St) in the case of a certain low level of the output signal of the equaliser part (10), is connected between the output of the linear equaliser part (10) and the limiter (4) and that the control signal output is connected with all the transverse filters of the circuit arrangements (Fig. 6).

6. Circuit arrangement according to Claim 4 for the case of small channel distortions, characterised thereby, that one co-efficient of the single transverse filter (2) displays a restricted setting range.

7. Circuit arrangement according to one of the preceding claims, characterised thereby, that the transverse filters (21, 22, ... 2K; 2) of the linear equaliser part (10) and/or the further transverse filter (20) are realised as complex transverse filters and the transit times of the transit time members of these transverse filters are chosen to be equal to the step duration or to the nth part of the step duration (2 = 2, 3, ...) of the digital signal.

8. Circuit arrangement according to one of the Claims 1 to 6, characterised thereby, that the transverse filters (21, 22, ..., 2K; 2) of the linear equaliser part (10) and/or the further transverse filter (20) are realised as real transverse filters and the transit time members in the transverse filters of the equaliser part (21, 22, ..., 2k; 2) and/or of the further transverse filter are dimensioned according to the equations:

$$\frac{2k-1}{2f_u} \leq \Gamma \leq \frac{k}{f_o}; \quad 0 \leq k \leq \text{Entier}\left[\frac{f_o}{2\,(f_o-f_u)}\right];$$

or

$$\frac{k}{f_u} \leq \Gamma \leq \frac{2k+1}{2f_o}; \quad 0 \leq k \leq \text{Entier}\left[\frac{f_o}{2\,(f_o-f_u)}\right];$$

wherein
k is the ordinal number of the frequency response period,
$f_u$ and $f_o$ are respectively the lower and the upper limit frequency of the digital signals,
$\Gamma$ the transit time of the signal in a transit time member and Entier (E) is the greatest whole number which is smaller than or equal to E.

**Revendications**

1. Montage pour l'égalisation adaptative de liaisons par diffusion troposphérique avec réception en diversité pour signaux modulés à enveloppe constante, avec au moins un bloc égaliseur (10) comportant un filtre transversal auquel les signaux des voies de diversité (1, 2, ..., K) sont appliqués et au filtre duquel un signal d'erreur est appliqué, ledit montage étant caractérisé en ce qu'un limiteur (4) est inséré entre le bloc égaliseur (10) et un démodulateur (6) démodulant les signaux égalisés, et l'entrée et la sortie du limiteur (4) sont reliées aux deux entrées d'un premier soustracteur (5) qui, à partir de la différence des signaux d'entrée et de sortie du limiteur (4), délivre le signal d'erreur ($\bar{e}$) qui sert au réglage des coefficients du ou des filtres transversaux du bloc égaliseur linéaire (10) (fig. 1).

2. Montage selon la revendication 1, caractérisé en ce qu'un second soustracteur (51), dont la seconde entrée est reliée par un filtre transversal supplémentaire (20) à la sortie du limiteur (4), est inséré entre le bloc égaliseur linéaire (10) et le limiteur (4) ; et un signal d'erreur ($\bar{e}$), prélevé à la sortie du premier soustracteur (5), sert au réglage des coefficients du filtre transversal supplémentaire (20) (fig. 3).

3. Montage selon l'une des revendications 1 ou 2, caractérisé en ce que le bloc égaliseur (10) contient pour chaque voie de diversité (1, 2, ..., K) un filtre transversal (21, 22, ..., 2K), dont les coefficients sont réglables en fonction du signal d'erreur ($\bar{e}$) ; et les sorties des filtres transversaux (21, 22, ..., 2K) sont reliées aux entrées d'un sommateur (3) dont la sortie constitue la sortie du bloc égaliseur (10) (fig. 4).

4. Montage selon l'une des revendications 1 ou 2, caractérisé en ce que le bloc égaliseur (10) comporte un combinateur de voies (9), qui regroupe les signaux des voies de diversité (1, 2, ..., K) en un signal somme ; la sortie du combinateur de voies (9) est reliée à l'entrée d'un filtre transversal unique (2), dont la sortie constitue la sortie du bloc égaliseur (10) ; et les coefficients du filtre transversal unique (2) sont réglables en fonction du signal d'erreur ($\bar{e}$) (fig. 5).

5. Montage selon l'une des revendications 2 à 4, caractérisé en ce qu'un dispositif de surveillance du niveau (52) est inséré entre la sortie du bloc égaliseur linéaire (10) et le limiteur (4), et comporte une sortie qui délivre un signal de commande (St) pour un niveau faible déterminé du signal de sortie du bloc égaliseur (10); et la sortie de signal de commande est reliée à tous les filtres transversaux du montage (fig. 6).

6. Montage selon la revendication 4, destiné à de faibles distorsions de voie et caractérisé en ce qu'un coefficient du filtre transversal unique (2) présente une plage de réglage limitée.

7. Montage selon l'une des revendications 1 à 6, caractérisé en ce que les filtres transversaux (21, 22, ... 2K; 2) du bloc égaliseur linéaire (10) et/ou le filtre transversal supplémentaire (20) sont réalisés sous forme de filtres transversaux complexes; et les temps de propagation des organes de retard de ces filtres transversaux sont choisi égaux à l'intervalle significatif du signal numérique ou à sa fraction $1/n$ ($n = 2, 3, ...$).

8. Montage selon l'une des revendications 1 à 6, caractérisé en ce que les filtres transversaux (21, 22, ... 2K; 2) du bloc égaliseur linéaire (10) et/ou le filtre transversal supplémentaire (20) sont réalisés sous forme de filtres transversaux réels (fig. 7); et les organes de retard dans les filtres transversaux du bloc égaliseur (21, 22, ... 2K; 2) et/ou le filtre transversal supplémentaire (20) sont dimensionnés selon les équations:

$$\frac{2k-1}{2f_u} \leq \Gamma \leq \frac{k}{f_o}; \quad 0 \leq k \leq \text{Entier}\left[\frac{f_o}{2\,(f_o - f_u)}\right];$$

ou

$$\frac{k}{f_u} \leq \Gamma \leq \frac{2k+1}{2f_o}; \quad 0 \leq k \leq \text{Entier}\left[\frac{f_o}{2\,(f_o - f_u)}\right];$$

avec:

k numéro d'ordre de la période,

$f_u$, $f_o$ fréquence limite inférieure ou supérieure des signaux numériques,

$\Gamma$ temps de propagation des signaux dans un organe de retard entier (E) le nombre entier maximal inférieur ou égal à E.

FIG.1

FIG.2

FIG. 3

FIG.4

0 085 356

FIG. 5

FIG. 6

DMOD — 6

$\tilde{s}$

20

TVFR

LIM — 4

5

$\overline{w}$

$\overline{e}$

$\tilde{b}_r$

51

St

PEG

52

$\overline{b}_\bullet$

31

10

3

$\overline{d}_1$

21

TVF1

22

TVF2

2K

TVFK

$\overline{d}_1$

$\overline{d}_2$

$\overline{d}_K$

FIG.7

FIG.8